# EUROPÄISCHE PATENTSCHRIFT

(11) **EP 0 953 782 B1**
(45) Veröffentlichungstag und Bekanntmachung des Hinweises auf die Patenterteilung: **27.10.2004**
(21) Anmeldenummer: 99890099.7
(22) Anmeldetag: 24.03.1999
(51) Int. Cl.: F16D 3/50, F16D 3/72

(54) **Kupplungskombination aus einer Ausgleichskupplung und einer drehelastischen Kupplung**
Coupling combining a compensation coupling and a flexible coupling
Accouplement combinant un accouplement de compensation et un accouplement élastique

(30) Priorität: 28.04.1998 AT 70998
(43) Veröffentlichungstag der Anmeldung: 03.11.1999
(73) Patentinhaber: Ellergon Antriebstechnik GmbH, 5300 Hallwang/Salzburg (AT)
(72) Erfinder: Geislinger, Matthias, Dipl.-Ing., 5026 Salzburg (AT)
(74) Vertreter: Hübscher, Helmut, Dipl.-Ing.

(56) Entgegenhaltungen:
- AT-B- 403 837
- DE-A- 1 525 341
- GB-A- 179 769

## Beschreibung

Die Erfindung bezieht sich auf eine Kupplungskombination aus einer Ausgleichskupplung und einer drehelastischen Kupplung, wobei die Ausgleichskupplung ein Kupplungsglied mit einem mittleren Rohrteil und zwei stirnseitigen, Anschlußringe zum Einbau in eine drehmomentübertragende Antriebsverbindung bildenden Membranteilen umfaßt und die drehelastische Kupplung einen Innenteil und einen Außenteil und zwischen Außenteil und Innenteil Federelemente zur Drehmomentübertragung aufweist.

Ausgleichskupplungen mit membranbestückten Kupplungsgliedern gewährleisten nicht nur wegen ihrer Torsionsfestigkeit eine einwandfreie Drehmomentübertragung, sondern erlauben auch wegen der Verformbarkeit ihrer Membranteile einen Ausgleich von radialen, axialen und winkeligen Verlagerungen der miteinander zu kuppelnden Antriebsteile, wobei je nach Anforderungen unterschiedliche Membran- und Rohrteilformen möglich sind und die Rohrteile und die Membranteile meist aus Hochleistungs-Faserverbundwerkstoffen bestehen und als Einzelstücke vorgefertigt oder als einheitliche Kupplungsglieder hergesellt werden können. Gemäß der AT 403.837 B ist es außerdem bei diesen Kupplungsgliedern bereits bekannt, beide Membranteile im Außenumfangsbereich am Rohrteil anzusetzen und im Innenumfangsbereich die Anschlußränder auszubilden, um die Membranteile in Anpassung an die gewünschten Anforderungen hinsichtlich der Beugeelastizität groß genug bemessen zu können. Diese Ausgleichskupplungen eignen sich bestens zur Verbindung von Turbinen, elastisch aufgestellten Motoren, Propellern od. dgl. mit dem Antriebsstrang, wobei, um dabei kritische Resonanzen aus dem Betriebsdrehzahlbereich herauszuhalten und gegebenenfalls andere Schwingungserscheinungen zu dämpfen, meist zusätzlich zur Ausgleichskupplung drehelastische bzw. drehelastische und schwingungsdämpfende Kupplungen in den Antriebsstrang eingebunden werden. Dazu sind bisher die Ausgleichskupplung und die drehelastische Kupplung axial aneinandergereiht und der Anschlußring des einen Membranteiles der Ausgleichskupplung wird unmittelbar oder über einen Zwischenflansch am Innen- oder Außenteil der anschließenden drehela- stischen Kupplung festgeschraubt. Dieses Nebeneinander von Ausgleichskupplung und drehelastischer Kupplung bringt allerdings eine vergleichsweise große Baulänge mit sich, die oft bei beengten Platzverhältnissen zu beträchtlichen Schwierigkeiten beim Ein- und Ausbau der Kupplungskombination führt.

Der Erfindung liegt daher die Aufgabe zugrunde, eine Kupplungskombination der eingangs geschilderten Art zu schaffen, die sich bei einwandfreiem Drehmomentübertragungs- und Versatzausgleichsverhalten durch ihre minimierte Baulänge und ihre günstigen Ein- und Ausbauverhältnisse auszeichnet.

Die Erfindung löst diese Aufgabe dadurch, daß der Rohrteil des Kupplungsgliedes der Ausgleichskupplung entlang einer achsnormalen Trennebene in zwei über auswärts ragende Flanschränder miteinander verschraubbare Rohrabschnitte getrennt ist, daß wenigstens einer der Membranteile des Kupplungsgliedes im Außenumfangsbereich am zugehörenden Rohrabschnitt ansetzt und an seinem Innenumfangsbereich den Anschlußring bildet und daß die drehelastische Kupplung im Bereich dieses Rohrabschnittes innerhalb des Kupplungsgliedes angeordnet ist, wobei der Anschlußring des Membranteiles am Außenteil der drehelastischen Kupplung festgeschraubt und der Innenteil koaxial durch den Anschlußring nach außen geführt ist. Dadurch läßt sich die drehelastische Kupplung in die Ausgleichskupplung voll integrieren und die erforderliche Beugelänge der Ausgleichskupplung bestimmt im wesentlichen auch die Gesamtlänge der ganzen Kupplungskombination. Wegen der Trennung des Rohrteiles in zwei Rohrabschnitte läßt sich dabei nicht nur die drehelastische Kupplung geschickt innerhalb der Ausgleichskupplung einsetzen, sondern die gesamte Kupplungskombination kann auch bei geringem Platzangebot im Bereich des Antriebsstranges durch ein abschnittsweises Ein- bzw. Ausbauen rationell montiert oder demontiert werden. Je nach Bedarf ist die drehelastische Kupplung antriebsseitig bzw. abtriebsseitig mit dem Membranteil der Ausgleichskupplung befestigbar, wobei zum Anschluß der Kupplungskombination an die benachbarten Teile des Antriebsstranges im Bereich der drehelastischen Kupplung deren Innenteil in üblicher Weise herangezogen wird, im Bereich des freien Membranteiles der Ausgleichskupplung hingegen dessen Anschlußring. Trotz der kompakten Bauweise und der miteinander integrierten unterschiedlichen Kupplungsarten kommt es zu einer klaren Trennung der Kupplungsfunktionen, wobei die Ausgleichskupplung die erforderlichen Ausgleichsbewegungen durchführt, die drehelastische Kupplung, die selbstverständlich auch als schwingungsdämpfende Kupplung ausgebildet sein kann, aber nur die Drehschwingungsbelastungen aufzunehmen hat.

Vorteilhaft kann es sein, wenn beide Membranteile des Kupplungsgliedes im Außenumfangsbereich an den zugehörenden Rohrabschnitten ansetzen und an ihren Innenumfangsbereichen die Anschlußringe bilden und wenn innerhalb beider Rohrabschnitte jeweils eine drehelastische Kupplung angeordnet ist, da so die Ausgleichskupplung mit zwei hintereinandergeschalteten drehelastischen Kupplungen kombiniert ist und die Möglichkeit besteht, sowohl der Motor- als auch der Getriebeseite eine drehela- stische Kupplung zuzuordnen. Der Einbau der Kupplungskombination in den Antriebsstrang erfolgt hier beiderseits über die Innenteile der drehelastischen Kupplungen und die Kupplungsgesamtlänge wird wiederum im wesentlichen durch die Beugelänge der Ausgleichskupplung bestimmt.

Eine weitere Konstruktionsvariante ergibt sich dadurch, daß der eine Membranteil des Kupplungsgliedes im Außenumfangsbereich und der andere Membranteil im Innenumfangsbereich am zugehörenden Rohrabschnitt ansetzen und der eine Membranteil am Innenumfangsbereich und der andere Membranteil am Außenumfangsbereich den Anschlußring bilden, wobei die unterschiedliche Durchmesser aufweisenden Rohrabschnitte über den Durchmesserunterschied ausgleichende, unterschiedlich große Flanschränder miteinander verschraubt sind. Hier wird die drehelastische Kupplung in den am Außenumfangsbereich des einen Membranteiles ansetzenden Rohrabschnitt eingebaut, wobei der Innenteil der drehelastischen Kupplung die Verbindung zum anschließenden Antriebsstrang herstellt, während der andere Rohrabschnitt im Innenumfangsbereich des anderen Membranteiles ansetzt und dieser Membranteil im Außenumfangsbereich den Anschlußring aufweist, so daß hier im Außenumfangsbereich ein direkter Anschluß an entsprechend großdurchmessrige Bauteile, beispielsweise einem Schwungrad od. dgl., möglich ist. Außerdem bietet der kleindurchmessrige Rohrabschnitt für die Verschraubung der Flanschränder einerseits bzw. der äußeren Anschlußringe anderseits eine gute Zugänglichkeit und damit verbesserte Montageverhältnisse.

Vorteilhaft ist es weiters, wenn im Innenumfangsbereich der Membranteile bzw. im Bereich des durchmesserkleineren Rohrabschnittes Belüftungsöffnungen und im Bereich der Flanschränder Entlüftungsöffnungen vorgesehen sind, so daß bei Kupplungsdrehung das Kupplungsglied als Lüfter wirkt und für eine einwandfreie Wärmeabfuhr aus dem Innenbereich der Kupplungskombination sorgt.

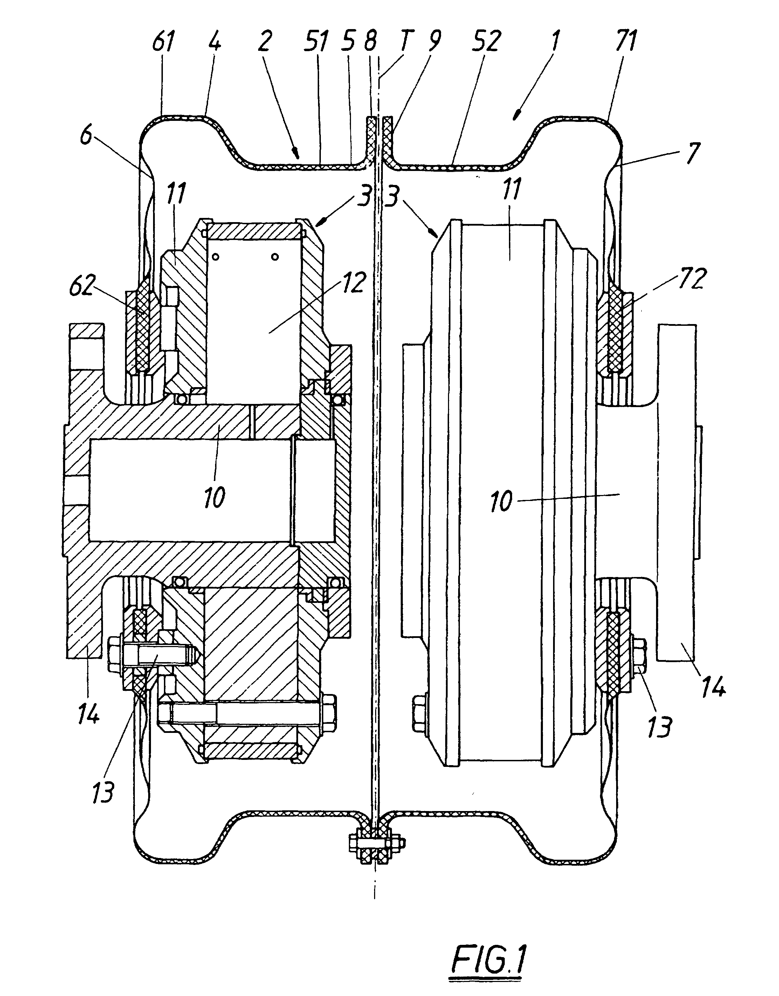

In der Zeichnung ist der Erfindungsgegenstand rein schematisch veranschaulicht, und zwar zeigen
Fig. 1, 2 und 3 drei verschiedene Ausführungsbeispiele einer erfindungsgemäßen Kupplungskombination jeweils im Axialschnitt.

Gemäß dem Ausführungsbeispiel nach Fig. 1 besteht die Kupplungskombination 1 aus einer Ausgleichskupplung 2 und zwei drehelastischen Kupplungen 3, wobei die Ausgleichskupplung ein Kupplungsglied 4 mit einem mittleren Rohrteil 5 und zwei stirnseitigen Membranteilen 6, 7 umfaßt. Der Rohrteil 5 ist entlang einer achsnormalen Trennebene T in zwei Rohrabschnitte 51, 52 getrennt, welche Rohrabschnitte über auswärts ragende Flanschränder 8, 9 miteinander verschraubt sind. Die Membranteile 6, 7 des Kupplungsgliedes 4 setzen jeweils im Außenumfangsbereich 61, 71 am zugehörenden Rohrabschnitt 51, 52 an und bilden an den Innenumfangsbereichen Anschlußringe 62, 72.

Die beiden drehelastischen Kupplungen 3 weisen jeweils einen Innenteil 10 und einen Außenteil 11 sowie zwischen Außenteil und Innenteil eingesetzte Federelemente 12 zur Drehmomentenübertragung auf, wobei die beiden drehelastischen Kupplungen 3 innerhalb des Kupplungsgliedes 4 im Bereich der Rohrabschnitte 51, 52 angeordnet sind, und die Anschlußringe 62, 72 der Membranteile 6, 7 am Außenteil 11 der dreh- elastischen Kupplungen 3 über Befestigungsschrauben 13 festgeschraubt sind. Die Innenteile 10 der Kupplungen 3 führen koaxial durch die Anschlußringe 62, 72 aus der Kupplungskombination 1 heraus und sind mit Anschlußflanschen 14 zum Einbau in eine drehmomentübertragende Antriebsverbindung ausgestattet.

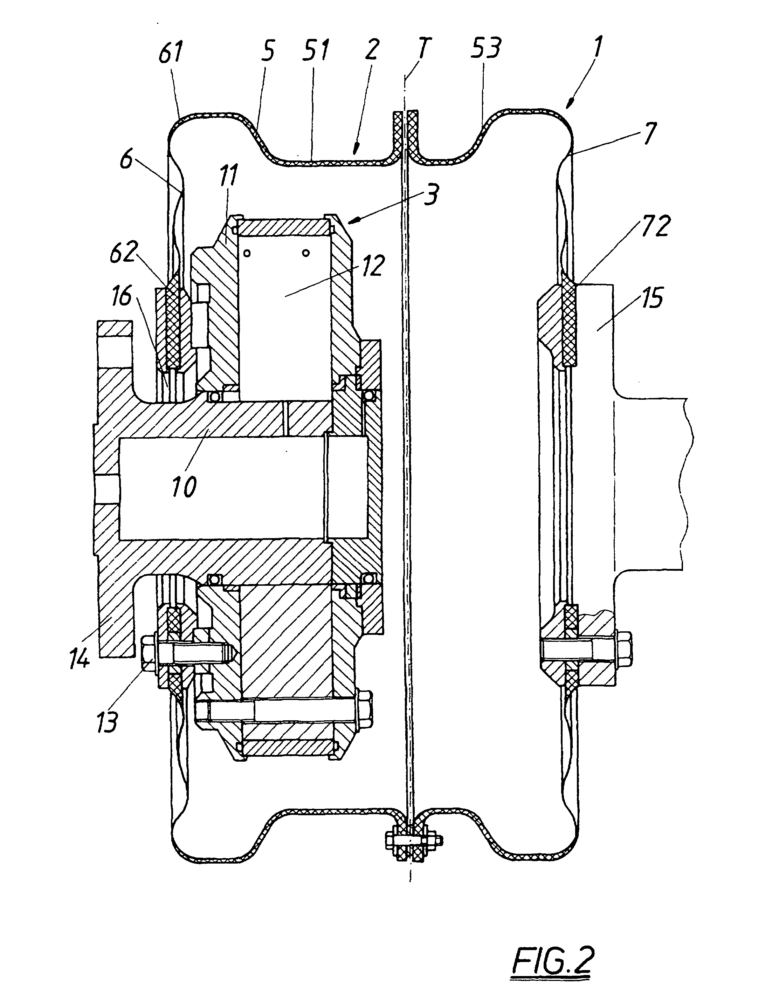

Gemäß dem Ausführungsbeispiel nach Fig. 2 setzt sich die Kupplungskombination 1 bei im wesentlichen gleichem Aufbau aus der Ausgleichskupplung 2 und nur einer drehelastischen Kupplung 3 zusammen, wobei die drehelastische Kupplung 3 innerhalb des Kupplungsgliedes 4 im Bereich des einen Rohrabschnittes 51 angeordnet ist. Der die drehelastische Kupplung 3 umschließende Rohrabschnitt 51 geht im Außenumfangsbereich 61 in den Membranteil 6 über, dessen innerer Flanschring 61 wiederum am Außenteil 11 der drehelastischen Kupplung 3 festgeschraubt ist, wobei der Innenteil 14 koaxial durch den Anschlußring 61 aus der Kupplungskombination 1 herausführt. Der andere Rohrabschnitt 53 ist wegen der fehlenden drehelastischen Kupplung axial kürzer bemessen und der Anschlußring 72 des im Außenumfangsbereich am Rohrabschnitt 53 ansetzenden Membranteiles 7 dient selbst zum Anschluß an einen nur angedeuteten Wellenflansch 15 des Antriebsstranges.

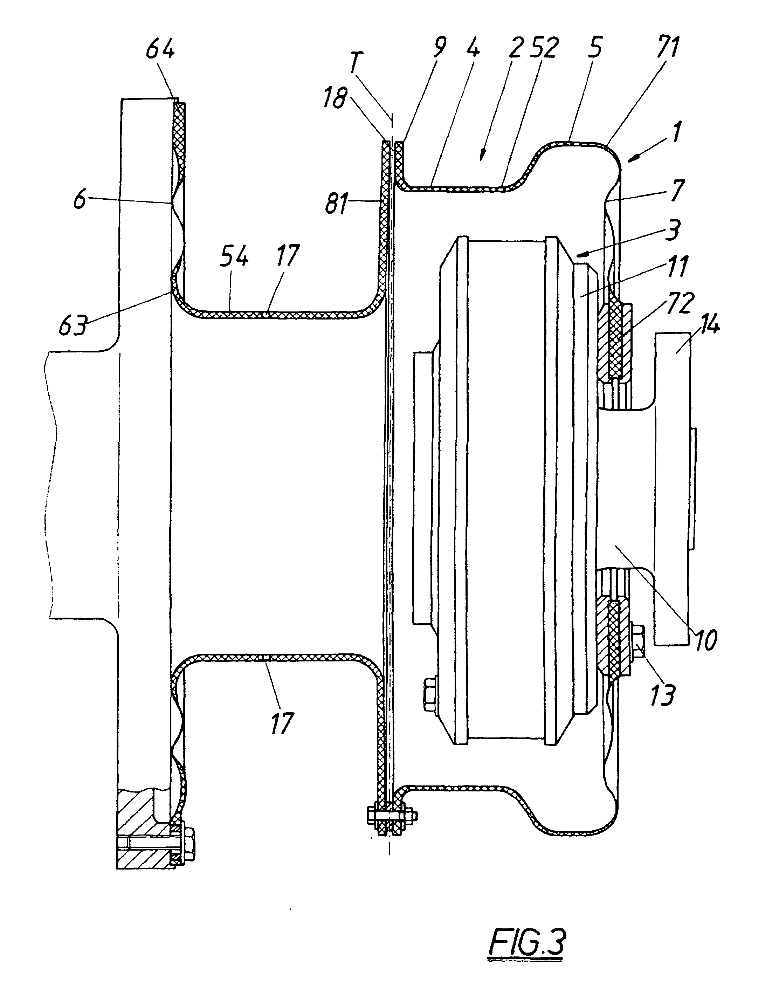

Gemäß dem Ausführungsbeispiel nach Fig. 3 besteht die Kupplungskombination 1 ebenfalls aus einer Ausgleichskupplung 2 und nur einer drehelastischen Kupplung 3, wobei der die drehelastische Kupplung 3 aufnehmende Rohrabschnitt 52 des Kupplungsgliedes 4 im Außenumfangsbereich 71 am zugehörenden Membranteil 7 ansetzt, welcher Membranteil 7 mit seinem im Innenumfangsbereich vorgesehenen Anschlußring 72 am Außenteil 11 der drehelastischen Kupplung 3 festgeschraubt ist. Der andere Rohrabschnitt 54 setzt im Innenumfangsbereich 63 des Membranteiles 6 an, welcher Membranteil 6 am Außenumfangsbereich den Anschlußring 64 bildet, was einen Anschluß der Kupplungskombination 1 mit großem Durchmesser, beispielsweise an einem motorseitigen Schwungrad od. dgl., ermöglicht. Da nun der Rohrabschnitt 54 einen kleineren Durchmesser aufweist als der Rohrabschnitt 52, sind die beiden Rohrabschnitte 54, 52 zur gegenseitigen Verbindung mit unterschiedlich großen Flanschrändern 81, 9 ausgestattet, so daß der Durchmesserunterschied der Rohrabschnitte ausgeglichen werden kann.

Zur Kühlung der Kupplungskombination 1 sind im Innenumfangsbereich der Membranteile 6 bzw. im Bereich des durchmesserkleineren Rohrabschnittes 54 Belüftungsöffnungen 16, 17 und im Bereich der Flanschränder 8, 81, 9, beispielsweise durch Zwischenräume zwischen den einzelnen Schraubverbindungen, Entlüftungsöffnungen 18 vorgesehen, wodurch die Kupplungskombination 1 selbst als Lüfter dient und Kühlluft durch die Ausgleichskupplung saugt.

## Patentansprüche

1. Kupplungskombination (1) aus einer Ausgleichskupplung (2) und einer drehelastischen Kupplung (3), wobei die Ausgleichskupplung (2) ein Kupplungsglied (4) mit einem mittleren Rohrteil (5) und zwei stirnseitigen, Anschlußringe (62, 72) zum Einbau in eine drehmomentübertragende Antriebsverbindung bildenden Membranteilen (6, 7) umfaßt und die drehelastische Kupplung (3) einen Innenteil (10) und einen Außenteil (11) und zwischen Außenteil und Innenteil Federelemente (12) zur Drehmomentübertragung aufweist, **dadurch gekennzeichnet, daß** der Rohrteil (5) des Kupplungsgliedes (4) der Ausgleichskupplung (2) entlang einer achsnormalen Trennebene (T) in zwei über auswärts ragende Flanschränder (8, 81, 9) miteinander verschraubbare Rohrabschnitte (51, 52, 53, 54) getrennt ist, daß wenigstens einer der Membranteile (6, 7) des Kupplungsgliedes (4) im Außenumfangsbereich (61, 71) am zugehörenden Rohrabschnitt (51, 52) ansetzt und an seinem Innenumfangsbereich den Anschlußring (62, 72) bildet und daß die drehelastische Kupplung (3) im Bereich dieses Rohrabschnittes (51, 52) innerhalb des Kupplungsgliedes (4) angeordnet ist, wobei der Anschlußring (62, 72) des Membranteiles (6, 7) am Außenteil (11) der drehelastischen Kupplung (3) festgeschraubt und der Innenteil (10) koaxial durch den Anschlußring (62, 72) nach außen geführt ist.

2. Kupplungskombination nach Anspruch 1, **dadurch gekennzeichnet, daß** beide Membranteile (6, 7) des Kupplungsgliedes (4) im Außenumfangsbereich (61, 71) an den zugehörenden Rohrabschnitten (51, 52) ansetzen und an ihren Innenumfangsbereichen die Anschlußringe (62, 72) bilden und daß innerhalb beider Rohrabschnitte (51, 52) jeweils eine drehelastische Kupplung (3) angeordnet ist.

3. Kupplungskombination nach Anspruch 1, **dadurch gekennzeichnet, daß** der eine Membranteil (7) des Kupplungsgliedes (4) im Außenumfangsbereich (71) und der andere Membranteil (6) im Innenumfangsbereich (63) am zugehörenden Rohrabschnitt (52, 54) ansetzen und der eine Membranteil (7) am Innenumfangsbereich und der andere Membranteil (6) am Außenumfangsbereich den Anschlußring (72, 64) bilden, wobei die unterschiedliche Durchmesser aufweisenden Rohrabschnitte (52, 54) über den Durchmesserunterschied ausgleichende, unterschiedlich große Flanschränder (81, 9) miteinander verschraubt sind.

4. Kupplungskombination nach einem der Ansprüche 1 bis 3, **dadurch gekennzeichnet, daß** im Innenumfangsbereich der Membranteile bzw. im Bereich des durchmesserkleineren Rohrabschnittes (54) Belüftungsöffnungen (16, 17) und im Bereich der Flanschränder (8, 81, 9) Entlüftungsöffnungen (18) vorgesehen sind.

## Claims

1. A coupling combination (1) consisting of a compensation coupling (2) and a torsionally elastic coupling (3), wherein the compensation coupling (2) comprises a coupling member (4) with a central tubular part (5) and two end-face diaphragm parts (6, 7) forming connection rings (62, 72) for installation in a torque-transmission drive connection and the torsionally elastic coupling (3) comprises an inner part (10) and an outer part (11) and, between the outer part and the inner part, spring elements (12) for torque transmission, **characterised in that** the tubular part (5) of the coupling member (4) of the compensation coupling (2) is separated along an axis-normal dividing plane (T) into two tubular portions (51, 52, 53, 54) which are adapted to be screwed together via outwardly projecting flange edges (8, 81, 9), **in that** at least one of the diaphragm parts (6, 7) of the coupling member (4) is attached to the associated tubular portion (51, 52) in the outer peripheral zone (61, 71) and at its inner peripheral zone forms the connection ring (62, 72) and **in that** the torsionally elastic coupling (3) is disposed in the region of said tubular portion (51, 52) inside the coupling member (4), the connection ring (62, 72) of the diaphragm part (6, 7) being screwed tightly on the outer part (11) of the torsionally elastic coupling (3) and the inner part (10) being taken out coaxially through the connection ring (62, 72).

2. A coupling combination according to claim 1, **characterised in that** the two diaphragm parts (6, 7) of the coupling member (4) are attached to the associated tubular portions (51, 52) in the outer peripheral zone (61, 71) and at their inner peripheral zones form the connection rings (62, 72) and **in that** a torsionally elastic coupling (3) is disposed inside each of the two tubular portions (51, 52).

3. A coupling combination according to claim 1, **characterised in that** the one diaphragm part (7) of the coupling member (4) is attached to the associated tubular portion (52, 54) in the outer peripheral zone (71) and the other diaphragm part (6) is so attached in the inner peripheral zone (63) and the one diaphragm part (7) at the inner peripheral zone and the other diaphragm part (6) at the outer peripheral zone form the connection ring (72, 64), the tubular portions (52, 54) which have different diameters being screwed together via flange edges (81, 9) of different sizes to compensate for the difference in diameters.

4. A coupling combination according to any one of claims 1 to 3, **characterised in that** aeration openings (16, 17) are provided in the inner peripheral zone of the diaphragm parts and in the region of the diameter-smaller tubular portion (54) and venting openings (18) are provided in the region of the flange edges (8, 81, 9).

## Revendications

1. Combinaison d'accouplements (1), formée d'un accouplement de compensation (2) et d'un accouplement à élasticité en rotation (3), l'accouplement de compensation (2) comprenant un organe d'accouplement (4) muni d'une partie tubulaire (5) centrale et deux parties de membrane (6, 7) frontales, formant des bagues de raccordement (62, 72) à monter dans une liaison d'entraînement assurant la transmission d'un couple de rotation, et l'accouplement à élasticité en rotation (3) présentant une partie intérieure (10) et une partie extérieure (11) et des éléments élastiques (12), entre la partie extérieure et la partie intérieure, pour assurer la transmission d'un couple de rotation, **caractérisée en ce que** la partie tubulaire (5) de l'organe d'accouplement (4) de l'accouplement de compensation (2) est séparée, le long d'un plan de séparation (T) perpendiculaire à l'axe, en deux tronçons tubulaires (51, 52, 53, 54) susceptibles d'être vissés ensemble par l'intermédiaire de bordures de bride (8, 81, 9) sortant à l'extérieur, **en ce qu'**au moins l'une des membranes (6, 7) de l'organe d'accouplement (4) est appliquée, sur la zone périphérique extérieure (61, 71), sur un tronçon tubulaire (51, 52) afférent, et forme, sur sa périphérique intérieure, la bague de raccordement (62, 72), et **en ce que** l'accouplement à élasticité de rotation (3) est disposé dans la zone de ce tronçon tubulaire (51, 52) à l'intérieur de l'organe d'accouplement (4), sachant que la bague de raccordement (62, 72) de la partie de membrane (6, 7) est fixée par serrage, sur la partie extérieure (11) de l'accouplement à élasticité en rotation (3), et la partie intérieure (10) est guidée axialement vers l'extérieur, à travers la bague de raccordement (62, 72).

2. Combinaison d'accouplements selon la revendication 1, **caractérisée en ce que** les deux parties de membrane (6, 7) de l'organe d'accouplement (4) s'amorcent, dans la zone périphérique extérieure (61, 71), sur les tronçons tubulaires (51, 52) afférents et forment, sur leurs zones périphériques intérieures, les bagues de raccordement (62, 72), et **en ce que**, à l'intérieur de chacun des deux tronçons tubulaires (51, 52), est disposé un accouplement à élasticité en rotation (3).

3. Combinaison d'accouplements selon la revendication 1, **caractérisée en ce qu'**une première partie de membrane (7) de l'organe d'accouplement (4) s'amorce dans la zone périphérique extérieure (71), et l'autre partie de membrane (6) s'amorce dans la zone périphérique intérieure (63), sur le tronçon d'extrémité (52, 54) afférent, et une première partie de membrane (7) sur la zone périphérique intérieure et l'autre partie de membrane (6), sur la zone périphérique extérieure, forment la bague de raccordement (72, 64), sachant que les tronçons tubulaires (52, 54) présentent des diamètres différents, sur lesquels sont vissées ensemble des bordures de bride (81, 9) de taille différente, compensant la différence de diamètre.

4. Combinaison d'accouplements selon l'une des revendications 1 à 3, **caractérisée en ce que** des ouvertures d'aération (16, 17) sont prévues dans la zone périphérique intérieure des parties de membrane, respectivement dans la zone du tronçon tubulaire (54) à petit diamètre, et des ouverture de désaération (18) sont prévues dans la zone des bords de bride (8, 81, 9).
